(19) Europäisches Patentamt
European Patent Office
Office européen des brevets

(11) **EP 4 481 673 B1**

(12) **EUROPEAN PATENT SPECIFICATION**

(45) Date of publication and mention
of the grant of the patent:
**29.07.2026 Bulletin 2026/31**

(21) Application number: **24176705.2**

(22) Date of filing: **17.05.2024**

(51) International Patent Classification (IPC):
*G06T 5/70* (2024.01)     *G06N 3/045* (2023.01)
*G06N 3/0475* (2023.01)

(52) Cooperative Patent Classification (CPC):
**G06T 5/70; G06N 3/044; G06N 3/045; G06N 3/047;**
**G06N 3/0475; G06N 3/08;** G06T 2207/10016;
G06T 2207/20081; G06T 2207/20084

(54) **GENERATING DOMAIN-SPECIFIC VIDEOS USING DIFFUSION MODELS**

ERZEUGUNG DOMÄNENSPEZIFISCHER VIDEOS UNTER VERWENDUNG VON
DIFFUSIONSMODELLEN

GÉNÉRATION DE VIDÉOS SPÉCIFIQUES À UN DOMAINE À L'AIDE DE MODÈLES DE DIFFUSION

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **17.05.2023 US 202363502885 P**

(43) Date of publication of application:
**25.12.2024 Bulletin 2024/52**

(73) Proprietor: **GOOGLE LLC**
**Mountain View CA 94043 (US)**

(72) Inventors:
• **YANG, Mengjiao**
  **Mountain View, CA 94043 (US)**
• **DU, Yilun**
  **Mountain View, CA 94043 (US)**
• **DAI, Bo**
  **Mountain View, CA 94043 (US)**
• **SCHUURMANS, Dale Eric**
  **Mountain View, CA 94043 (US)**

(74) Representative: **Kennedy, Richard E. et al**
**Venner Shipley LLP**
**5 Stirling House**
**Stirling Road**
**The Surrey Research Park**
**Guildford GU2 7RF (GB)**

(56) References cited:
• YUYANG ZHAO ET AL: "Make-A-Protagonist:
Generic Video Editing with An Ensemble of
Experts", ARXIV.ORG, CORNELL UNIVERSITY
LIBRARY, 201 OLIN LIBRARY CORNELL
UNIVERSITY ITHACA, NY 14853, 15 May 2023
(2023-05-15), XP091509264
• YOGESH BALAJI ET AL: "eDiffi: Text-to-Image
Diffusion Models with an Ensemble of Expert
Denoisers", ARXIV.ORG, CORNELL UNIVERSITY
LIBRARY, 201 OLIN LIBRARY CORNELL
UNIVERSITY ITHACA, NY 14853, 2 November
2022 (2022-11-02), XP091358832

**Description**

BACKGROUND

This specification relates to generating videos using machine-learning models.

Machine-learning models receive an input and generate an output, e.g., a predicted output, based on the received input. Some machine-learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output. Zhao, Yuyang, et al. "Make-a-protagonist: Generic video editing with an ensemble of experts." arXiv preprint arXiv:2305.08850 (2023) propose a generic video editing framework that uses multiple experts to parse source video, target visual and textual clues, and a visual-textual-based video generation model that employs mask-guided denoising sampling to generate the desired output. I

SUMMARY

The invention is defined by the claims. This specification describes methods, computer systems, and apparatus, including computer programs encoded on computer storage media, for generating a domain-specific video conditioned on an input, e.g., an input text prompt providing a description of the video to be generated.

In this specification, a domain-specific video refers to a video belonging to a particular category or type. This can be a video of a particular style, a video having a particular intended purpose, a video having a particular content format, or a video focused on a particular subject or field. For example, the particular video category can be animations, tutorial videos, documentary-style videos, sci-fi videos, cinematic short films, videos depicting natural scenes, videos depicting manipulation and navigation of a robotic agent, videos depicting egocentric motions, and so on.

In this specification, a denoising diffusion model generally refers to a model (e.g., implemented as a neural network model) that generates an image or a video by "denoising" an initial noisy representation of the image or video, e.g., a representation in which some or all of the values are sampled from a noise distribution. By generating diffusion outputs that are used to remove noise from the initial representation, the diffusion model transforms the initial noisy representation into a final representation of the output video.

In one particular aspect, this specification describes a video generation method for generating an output video conditioned on an input. The video generation method can be implemented by a system including one or more computers. The system receives a conditioning input, and initializes a current intermediate representation of the output video.

At each of a plurality of iterations, the system updates the current intermediate representation. In particular, at each iteration, the system generates a first noise output by processing a first input including the current intermediate representation using a first denoising diffusion model conditioned on the conditioning input. The first denoising diffusion model has been trained on first training data including a first plurality of training videos. The system generates a second noise output conditioned on the conditioning input by processing a second input including the current intermediate representation using a second denoising diffusion model conditioned on the conditioning input. The second denoising diffusion model (i) is different from the first denoising diffusion model and (ii) has been trained on second training data including a second plurality of training videos. The system generates a combined noise output by combining at least (i) the first noise output and (ii) the second noise output, and updates the current intermediate representation using the combined noise output generated for the iteration.

The system generates the output video from the current intermediate representation after the final iteration.

In some implementations of the video generation method, the conditioning input is an input text prompt.

In some implementations of the video generation method, the first denoising diffusion model has a greater number of model parameters than the second denoising diffusion model.

In some implementations of the video generation method, the first denoising diffusion model has been trained on a greater number of training videos than the second denoising diffusion model.

In some implementations of the video generation method, the second denoising diffusion model has been trained on training videos belonging to a particular type, and the first denoising diffusion model has been trained on more than one type of training videos.

In some implementations of the video generation method, to combine (i) the first noise output and (ii) the second noise output, the system computes a weighted sum of (i) the first noise output and (ii) the second noise output.

In some implementations of the video generation method, at each iteration, the system further generates a third noise output by processing a third input including the current intermediate representation using the second denoising diffusion model, where the third noise output is not conditioned on the conditioning input. To generate the combined noise output, the system combines (i) the first noise output, (ii) the second noise output, and (iii) the third noise output.

In some implementations of the video generation method, each respective iteration corresponds to a respective noise level, and each of the first and the second input further includes data specifying the respective noise level.

In some implementations of the video generation method, for each iteration other than the last iteration, to update the current intermediate representation, the system performs diffusion sampling to an input including the current intermediate representation and the combined noise output.

In another particular aspect, this specification describes a domain-specific video generation method for generating a domain-specific output video conditioned on an input. The video generation method can be implemented by a system including one or more computers.

The system obtains model parameter values for a pre-trained denoising diffusion model. The pre-trained denoising diffusion model (i) is configured to process an intermediate input to generate a noise output, and (ii) has been trained on first training data including a plurality of training videos.

The system receives a request for generating a video of a particular type. The system obtains model parameter values for a domain-specific denoising diffusion model. The domain-specific denoising diffusion model has been trained on second training data including a plurality of domain-specific training videos of the particular type.

The system receives a conditioning input, and initializes a current intermediate representation of the domain-specific output video. At each of a plurality of iterations, the system updates the current intermediate representation. In particular, at each iteration, the system generates a first noise output by processing a first input including the current intermediate representation using the pre-trained denoising diffusion model conditioned on the conditioning input. The system generates a second noise output by processing a second input including the current intermediate representation using the domain-specific denoising diffusion model conditioned on the conditioning input. The system generates a combined noise output by combining at least (i) the first noise output and (ii) the second noise output. The system then updates the current intermediate representation using the combined noise output generated for the iteration.

The system generates the output domain-specific video from the current intermediate representation after the final iteration.

In some implementations, the output can be used to generate domain-specific training data for a video processing model. For example, the system can generate synthetic videos to augment an existing small set of real-world videos for training a video processing model.

In some implementations of the domain-specific video generation method, the system receives a request for generating a video of a second particular type. The system further obtains model parameter values for a second domain-specific denoising diffusion model. The second domain-specific denoising diffusion model has been trained on third training data including a plurality of domain-specific training videos of the second particular type. The system initializes the current intermediate representation of the domain-specific output video. At each of a plurality of iterations, the system updates the current intermediate representation based on a third noise output generated using the pre-trained denoising diffusion model and a fourth noise output generated using the second domain-specific denoising diffusion model. The system generates a second output domain-specific video from the current intermediate representation after the final iteration.

In some implementations of the domain-specific video generation method, to obtain the model parameter values for the domain-specific denoising diffusion model, the system obtains the second training data including the plurality of domain-specific training videos of the particular type, and trains the domain-specific denoising diffusion model on the second training data.

In some implementations of the domain-specific video generation method, the conditioning input is an input text prompt.

In some implementations of the domain-specific video generation method, the pre-trained denoising diffusion model has a greater number of model parameters than the domain-specific denoising diffusion model.

In some implementations of the domain-specific video generation method, the pre-trained denoising diffusion model has been trained on a greater number of training videos than the domain-specific denoising diffusion model.

In some implementations of the domain-specific video generation method, the pre-trained denoising diffusion model has been trained on more than one types of training videos.

In some implementations of the domain-specific video generation method, to combine the first noise output and the second noise output, the system computes a weighted sum of (i) the first noise output and (ii) the second noise output.

In some implementations of the domain-specific video generation method, to update the current intermediate representation for the respective iterative step, the system further generates a third noise output by processing a third input including the current intermediate representation using the domain-specific denoising diffusion model. The third noise output is not conditioned on the conditioning input. To generate the combined noise output, the system combines (i) the first noise output, (ii) the second noise output, and (iii) the third noise output.

In some implementations of the domain-specific video generation method, each respective iteration corresponds to a respective noise level, and each of the first and the second input further includes data specifying the respective noise level.

In some implementations of the domain-specific video generation method, for each iteration other than the last iteration, to update the current intermediate representation, the system performs diffusion sampling to an input including the current intermediate representation and the combined noise output.

In another aspect, this specification describes a system implemented as computer programs on one or more computers in one or more locations that performs the video generation method described above.

In one particular aspect, this specification describes one or more computer-readable storage media storing instructions that, when executed by one or more computers, cause the one or more computers to perform the video generation method described above.

The subject matter described in this specification can be implemented in particular implementations so as to realize one or more of the following advantages.

Large video generative models trained on large datasets (e.g., internet-scale data) have demonstrated exceptional capabilities in generating high-fidelity videos. However, adapting these models for domain-specific tasks such as generating animations or robotic videos poses significant computational challenges, because fine-tuning pre-trained large models requires significant computation resources and can cause performance degradation due to model overfitting.

This specification describes techniques for efficiently adapting a large video generative model pre-trained on non-domain-specific training examples to generate domain-specific videos. By leveraging the pre-trained large model, the described techniques enable generating high-quality domain-specific videos (e.g., domain-specific videos of high fidelity and high perceptual quality) using limited domain-specific training examples. The described techniques are also computationally efficient, that is, require less computation time and/or resources by adapting a pre-trained large model to combine with different task-specific small models, without needing to fine-tune the large model using domain-specific training data.

In particular, the pipeline for generating a domain-specific output video described herein includes: at each of a plurality of iterations, (i) generating a first noise output by processing a first input including the current intermediate representation using a first denoising diffusion model conditioned on the conditioning input, where the first denoising diffusion model has been trained on first training data comprising a first plurality of training videos, (ii) generating a second noise output conditioned on the conditioning input by processing a second input comprising the current intermediate representation using a second denoising diffusion model conditioned on the conditioning input, where the second denoising diffusion model (a) is different from the first denoising diffusion model and (b) has been trained on second training data comprising a second plurality of training videos, (iii) generating a combined noise output by combining at least (a) the first noise output and (b) the second noise output, and (vi) updating the current intermediate representation using the combined noise output generated for the iteration. The output video can be generated from the current intermediate representation after the final iteration. In general, the second denoising diffusion model is a smaller model, i.e., having fewer model parameters compared to the first denoising diffusion model, and is trained on a smaller number of training videos compared to the training of the first denoising diffusion model. This process results in generating high-quality domain-specific videos using limited domain-specific training examples, as well as improved latency and less computational resource requirement, as the process eliminates the need for finetuning a large model using domain-specific training data.

BRIEF DESCRIPTION OF THE DRAWINGS

FIG. 1 shows an example of a video generation system.

FIG. 2 shows an example workflow of a video generation system.

FIG. 3 is a flow diagram illustrating an example process for generating a video.

FIG. 4 is a flow diagram illustrating an example process for generating a domain-specific video.

FIG. 5 illustrates a performance comparison of video generation techniques.

Like reference numbers and designations in the various drawings indicate like elements.

DETAILED DESCRIPTION

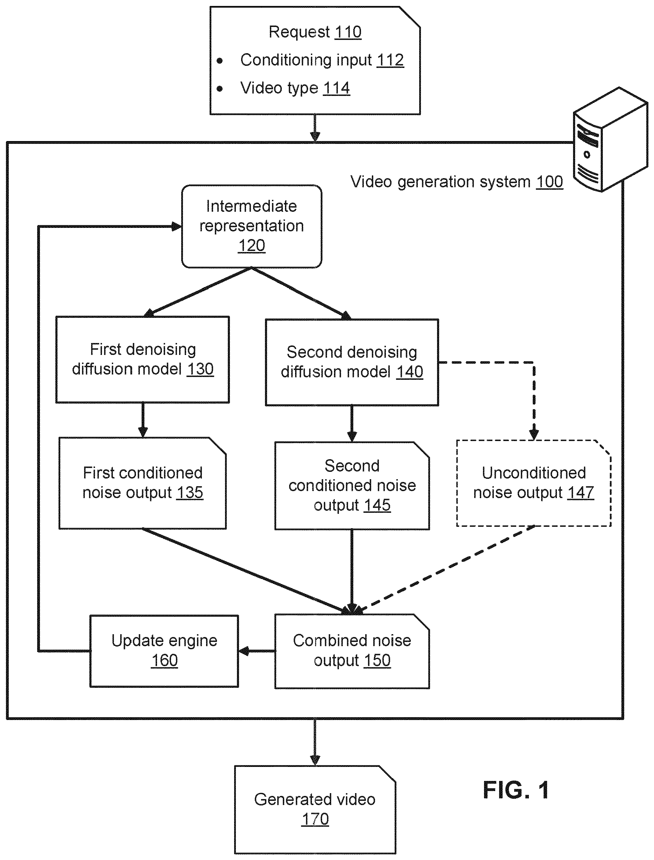

FIG. 1 shows an example video generation system 100. The video generation system 100 is an example of a system implemented as computer programs on one or more computers in one or more locations in which the systems, components, and techniques described below are implemented.

The video generation system 100 is configured to receive a request 110 for generating an output video 170. The request 110 can be a request that specifies the characteristics of the output video 170 to be generated by the system 100.

The request 110 can include a conditioning input 112 that provides a guidance to direct the video generation process toward a specific desired output video 170. The conditioning input 112 can be any appropriate form. In some cases, the conditioning input 112 can be a text description that describes what should be in the output video 170. In an illustrative example, the conditioning input 112 can be a text prompt, e.g., "Generate a video of a cat chasing a mouse through a house." In some cases, the conditioning input 112 can include other forms of content that guide the generation of the output video 170, such as an initial image or an initial video from which the output video 170 is to be generated.

In some cases, the request 110 can specify a particular video type 114 for the output video 170. The video type 114 can specify a particular style of the output video 170, a particular intended purpose of the output video 170, a particular content format of the output video 170, or a particular subject or field of the output video 170. For example, the video type 114 can specify that the output video 170 should be an animation, a tutorial video, a documentary-style video, a sci-fi video, a cinematic short film, a video depicting a natural scene, a video depicting manipulation and navigation of a robotic agent, a video depicting egocentric motions, and so on.

To generate the video 170, the video generation system 100 iteratively updates an intermediate representation 120 at each of multiple iterations. The intermediate representation 120 at each iteration can be interpreted as the output video 170 with additional noise. For example, an intermediate representation $\tau_t$ at a current iteration t can include a current intensity value for each of the pixels in each of the video frames of a noisy version of the output video 170.

In some implementations, the intermediate representation 120 can be a latent representation of the intensity values of the pixels of the video frames of a noisy version of the output video 170. That is, the system 100 performs a diffusion process in latent space, e.g., in a latent space that is lower-dimensional than the pixel space. In other words, the videos operated on by the diffusion models 130 and 140 are latent videos and the values for the pixels of the video frames are learned, latent values rather than color values. In these examples, the denoising output is an estimate of the noise that has been added to a latent representation of the target video frame in the latent space to arrive at the input latent representation in the latent space. In these implementations, the diffusion models can be associated with a video encoder to encode videos into the latent space and a decoder that receives an input that includes a latent representation of a video and decodes the latent representation to reconstruct the video.

The system 100 can update the intermediate representation at each of the iterations t through 0 by removing an estimate for the noise corresponding to the iteration. That is, the system 100 can refine the intermediate representation 120 at each iteration by determining an estimate for the noise and updating the current intermediate representation in accordance with the estimate. The system 100 can use a descending order for the iterations until outputting the output video 170. That is, the system 100 can perform the iterations for updating $\tau_t$ from t = T through t = 1, where T represents the number of iterations.

The system 100 can initialize the intermediate representation 120 by sampling the intensity values of the pixels in each video frame in the video from a noise distribution, e.g., a Gaussian noise distribution,. For example, the initial intermediate representation $\tau_T$ can be represented by $\tau_T = N(0, 1)$.

The system uses a first denoising diffusion model 130 and a second denoising diffusion model 130 to estimate the noise at each iteration. A denoising diffusion model generally refers to a model (e.g., implemented as a neural network model) that estimates and removes noise from an initial noisy representation of the image or video. Any appropriate architectures can be used for the first and second denoising diffusion models. Examples of a denoising diffusion model for video generation are described in Ho et al., "Imagen video: High 274 definition video generation with diffusion models," arXiv preprint arXiv:2210.02303, 2022. Some other examples of a denoising diffusion model for video generation are described in Ho, et al., "Diffusion probabilistic modeling for video generation," arXiv:2203.09481, 2022.

The first denoising diffusion model 130 is configured to process the current intermediate representation (i.e., the intermediate representation 120 at the current iteration) to generate a first conditioned noise output 135 conditioned on the conditioning input 112. The second denoising diffusion model 140 is configured to process the current intermediate representation to generate a second conditioned noise output 145 conditioned on the conditioning input 112. The first denoising diffusion model 130 and the second denoising diffusion model 140 can use any appropriate mechanisms to condition the noise outputs 135 and 145 on the conditioning input 112.

For example, when the conditioning input 112 is a text prompt, the system 100 can use a text encoder model to process the text prompt to generate a text embedding. At each iteration, the first or second denoising diffusion model can generate the noise outputs conditioned on the text embedding. The incorporation of the text embedding in the noise estimation process can be achieved using any of a variety of mechanisms. In some cases, the text embedding can be incorporated into the inputs of the denoising diffusion models. For example, the first or the second input to the denoising diffusion models can include a combination (e.g., a concatenation) of the current intermediate representation 120 and the text embedding. In some cases, the first or the denoising diffusion model can use attention mechanisms, e.g., cross-attention, or conditional normalization layers, e.g., conditional group normalization, to incorporate the text embedding.

In some implementations, each respective iteration corresponds to a respective noise level, and each of the first and the second input further includes data specifying the respective noise level. The noise level can be selected for each iteration t with a pre-defined schedule. Any appropriate schedule can be used to define the noise levels for the iterations. In some cases, the noise level increases with the iteration steps.

After the first conditioned noise output 135 and the second conditioned noise output 145 have been generated for the current iteration, the system 100 can generate a combined noise output 150 by combining at least (i) the first conditioned noise output 135 and (ii) the second conditioned noise output 145. In some cases, the combined noise output 150 can be computed as a weighted sum of the first conditioned noise output 135 and the second conditioned noise output 145. In some implementations, the system 100 further generates an unconditioned noise output 147 by processing a third input including the current intermediate representation 120 using the second denoising diffusion model 140. The unconditioned noise output 147 is not conditioned on the conditioning input 112. That is, the system 100 does not apply the mechanism to the second denoising diffusion model 140 for conditioning the noise estimate using the conditioning input 112 when generating the unconditioned noise output 147. Then the system 100 generates the combined noise output 150 by combining, e.g., by computing a weighted sum of (i) the first conditioned noise output 135, (ii) the second conditioned noise output 145, and (iii) the unconditioned noise output 147. In a particular example, the combination can be defined by weight parameters $\gamma$ and $\alpha$, and the combined noise output 150 at the current iteration $t$ can be computed using the process:

$$\begin{aligned}
\tilde{\epsilon}_{\text{text}} &\leftarrow \epsilon_2(\tau_t, t \mid \text{text}) + \gamma \epsilon_1(\tau_t, t \mid \text{text}) \\
\epsilon &\leftarrow \epsilon_2(\tau_t, t) \\
\tilde{\epsilon}_c &\leftarrow \epsilon + \alpha(\tilde{\epsilon}_{\text{text}} - \epsilon)
\end{aligned} \tag{1}$$

where $\epsilon_1(\tau_t, t \mid \text{text})$ is the first conditioned noise output 135, $\epsilon_2(\tau_t, t \mid \text{text})$ is the second conditioned noise output 145, $\epsilon_2(\tau_t, t)$ is the unconditioned noise output 147, and $\tilde{\epsilon}_c$ is the combined noise output 150.

After the combined noise output 150 has been generated for the current iteration t, the update engine 160 is configured to update the current intermediate representation 120 using the combined noise output 150 generated for the iteration. In one example, the update process can be represented by:

$$\tau^{t-1} = \alpha^t(\tau^t - \gamma^t \tilde{\epsilon}_c(t) + \xi), \quad \xi \sim \mathcal{N}(0, \sigma_t^2 I) \tag{2}$$

where $\gamma^t$ represents a step size of denoising at the current iteration, $\alpha^t$ is a linear decay on the currently denoised sample at the current iteration, and $\xi$ is a noise sampled from a corresponding noise distribution (e.g., a normal distribution) for the iteration.

In this example, the noise output from a diffusion model is an estimate of the noise component of the representation. Other examples of noise output can include other types of estimates, such as v-parameterization, which is a difference between the current noisy image and the slightly less noisy image from the previous step.

The update engine 160 can apply diffusion sampling to generate the updated intermediate representation 120. Any appropriate sampling scheme can be used for the diffusion sampling. For example, in some cases, the diffusion sampling can be performed using a discrete time ancestral sampler, which generates samples from a discrete-time probabilistic model by sampling values for variables sequentially. In some cases, the diffusion sampling process can be performed using a predictor-corrector sampler, which applies a correction step to a sample prediction at each iteration of the sampling process.

At the final iteration (i.e., t = 0), the update engine 160 generates a prediction of the output video 170 using the current intermediate representation 120 and the combined noise output 150, but does not apply diffusion sampling to the prediction of the output video 170. The system 100 can output the generated video 170, e.g., to present the video 170 on a user display or transmit the video 170 for display.

In some implementations, the number of iterations is fixed. In other implementations, the video generation system 100 or another system can adjust the number of iterations based on a performance metric of the output video 170. That is, the video generation system 100 can select the number of iterations so that the output video 170 will be generated to satisfy the performance metric.

In other implementations, the video generation system 100 or another system can adjust the number of iterations based on a computational resource consumption requirement for the generation of the output video 170, i.e., can select the number of iterations so that the output video 104 will be generated to satisfy the requirement.

In some implementations, the first denoising diffusion model 130 is a larger model compared to the second denoising diffusion model 140. That is, the first denoising diffusion model 130 has a greater number of model parameters than the second denoising diffusion model 140. In some cases, the first denoising diffusion model 130 has a more complex architecture compared to the second denoising diffusion model 140. For example, the first denoising diffusion model 130 can include a greater number of layers and/or sub-networks. In some cases, the first denoising diffusion model 130 has been trained on a greater number of training videos than the second denoising diffusion model.

The training of the first denoising diffusion model 130 and/or the second denoising diffusion model 140 can include minimizing a loss function. In one example, the loss function can include a pixel-wise mean squared error (MSE) loss, which characterizes a difference between the generated frames and the target frames. In another example, the loss function can include a structural similarity index (SSIM) loss which measures a structural similarity between the generated image frames and the target image frames. In another example, the loss function can include a perceptual loss, which characterizes a perceptual similarity between the generated image frames and the target image frames. The perceptual loss can be computed using a pre-trained model configured to characterize high-level features and semantic content related to perception. In another example, the loss function can include a temporal consistency loss that measures a temporal smoothness between consecutive video frames. In another example, the loss function can include a score matching objective that characterizes a difference between a score function of the distribution of the generated videos and the score function of the distribution of target videos. In some cases, the loss function can include a combination of two or more loss terms characterizing two or more different types of losses.

In some implementations, the first denoising diffusion model 130 is a pre-trained model that has been trained on more than one type of training videos, while the second denoising diffusion model 140 has been trained on training videos belonging to a particular type, e.g., the video type 114 specified in the request 110. In other words, the first denoising diffusion model 130 is a pre-trained model that has been trained on a generalized dataset while the second denoising diffusion model 140 is a domain-specific model that has been trained on domain-specific training examples.

Thus, the first denoising diffusion model 130 is trained to generate videos with a more general appearance, while the second denoising diffusion model 140 is trained to generate videos having the same type as the domain-specific training examples, e.g., having a particular intended purpose, a particular content format, or being focused on a particular subject or field.

In some implementations, the second denoising diffusion model 140 is both domain-specific and smaller compared to the first denoising diffusion model 130.

While large, general video generative models (e.g., the first denoising diffusion model 130) trained on large datasets (e.g., internet-scale data) have demonstrated to generate high-fidelity videos, these generated videos are not adapted to the particular video type 114. On the other hand, although a domain-specific video generative model (e.g., the second denoising diffusion model 140) can be trained on domain-specific training examples, it lacks flexibility and is usually a smaller model due to constraints such as limited availability of domain-specific training examples and/or computational resources.

By combining the noise outputs generated by the pre-trained model 130 and the domain-specific model 140, the system 100 can generate high quality output videos 170 of the particular video type 114 without the need for training a large domain-specific generative model or finetuning the large pre-trained model on additional domain-specific training data. Re-training or finetuning a large video generative model poses significant computational challenges. In particular, fine-tuning pre-trained large models requires significant computation resources and can cause performance degradation due to model overfitting. The described techniques can offer improved latency and less computational resource requirement, as the process eliminates the need for training a large domain-specific model or finetuning a large model using domain-specific training data. This is achieved by combining the noise outputs generated by the pre-trained model and the domain-specific model during the diffusion process.

Combining the noise outputs generated by the pre-trained model 130 and the domain-specific model 140 can be interpreted in the framework of energy based analysis of denoising diffusion probability models. A denoising diffusion model can be understood to estimate the probability scores characterizing noisy versions of the output video according to an underlying energy-based probability distribution $p_\theta(\tau) \propto e^{-E_\theta(\tau)}$, where the denoising diffusion model is given by $\varepsilon(\tau^t, t) = \nabla_\tau E_\theta(\tau^t)$. The sampling procedure in a diffusion model corresponds to the Langevin sampling procedure on an energy based model (EBM) is given as

$$\tau^{t-1} = \alpha^t(\tau^t - \gamma \nabla_\tau E_\theta(\tau^t) + \xi), \ \xi \sim \mathcal{N}(\mathbf{0}, \sigma_t^2 \mathbf{I}) \tag{3}$$

This equivalence of diffusion models and EBMs allows sampling from the product of two different diffusion models $p_1(\tau)p_2(\tau)$, such that each diffusion model corresponds to a respective EBM, $e^{-E_1(\tau)}$ and $e^{-E_2(\tau)}$, and the product is given by $e^{-E(\tau)} = e^{-(E_1(\tau)+E_2(\tau))}$. Sampling from this new distribution also by using Langevin sampling provides:

$$\tau^{t-1} = \alpha^t(\tau^t - \gamma\nabla_\tau E'_\theta(\tau^t) + \xi), \, \xi \sim \mathcal{N}(0, \sigma_t^2 \mathbf{I}) \tag{4}$$

which corresponds to the sampling procedure using denoising functions

$$\tau^{t-1} = \alpha^t \left(\tau^t - \gamma\left(\epsilon_\theta^1(\tau^t, t) + \epsilon_\theta^2(\tau^t, t)\right) + \xi\right), \, \xi \sim \mathcal{N}(0, \sigma_t^2 \mathbf{I}) \tag{5}$$

The large pre-trained diffusion model 130 captures a prior $p_{\text{pretrained}}(\tau \mid \text{text})$ on the general distribution of videos $\tau$. Such a distribution $p_{\text{pretrained}}(\tau \mid \text{text})$ encodes ubiquitous characteristics that are shared across videos such as temporal consistency, object permanence, and the underlying semantics of different objects.

The smaller diffusion model $p_\theta(\tau \mid \text{text})$ trained on domain-specific video data $D_{\text{Adapt}}$ represents the distribution of videos in $D_{\text{Adapt}} \cdot p_{\text{pretrained}}(\tau \mid \text{text})$ can be adapted to $D_{\text{Adapt}}$ by constructing a product distribution $p_{\text{joint}}(\tau \mid \text{text})$ in the form:

$$\underbrace{p_{\text{product}}(\tau \mid \text{text})}_{\text{Product Distribution}} \propto \underbrace{p_{\text{pretrained}}(\tau \mid \text{text})}_{\text{Pretrained Prior}} \underbrace{p_\theta(\tau \mid \text{text})}_{\text{Video Model}} \tag{6}$$

By fixing the pre-trained model $p_{\text{pretrained}}(\tau \mid \text{text})$, the system 100 or another system can train the domain-specific model $p_\theta(\tau \mid \text{text})$ accordingly to a maximum likelihood estimation on $D_{\text{Adapt}}$ This allows $p_\theta(\tau \mid \text{text})$ to exhibit high likelihood across videos in $D_{\text{Adapt}}$ However, because $p_\theta(\tau \mid \text{text})$ is a small model trained on less diverse data it can also exhibit erroneously high likelihood across many unrealistic videos. The product distribution $p_{\text{product}}(\tau \mid \text{text})$ removes unrealistic videos by down-weighting any videos $\tau$ that is not likely under the pre-trained prior, enabling the system to controllably generate videos of the type in $D_{\text{Adapt}}$

Based on the EBM interpretation, the pre-trained diffusion model $p_{\text{pretrained}}(\tau \mid \text{text})$ corresponds to an EBM $e^{-E_{\text{pretrained}}(\tau \mid \text{text})}$ while the domain-specific model $p_\theta(\tau \mid \text{text})$ parameterizes an EBM $e^{-E_\theta(\tau \mid \text{text})}$). The product distribution then corresponds to:

$$p_{\text{product}}(\tau \mid \text{text}) \propto p_{\text{pretrained}}(\tau \mid \text{text})p_\theta(\tau \mid \text{text}) \propto e^{-\left(E_{\text{pretrained}}(\tau \mid \text{text}) + E_\theta(\tau \mid \text{text})\right)} = e^{-E'(\tau \mid \text{text})}$$

which specifies a new EBM $E'(\tau)$ from the sum of energy functions of the component models.

Substituting EBM $E'(\tau)$ into Eq. (2) provides that one can sample from the product distribution $p_{\text{product}}(\tau \mid \text{text})$ through the diffusion sampling procedure:

$$\tau^{t-1} = \alpha^t \left(\tau^t - \gamma\nabla_\tau\left(E_{\text{pretrained}}(\tau^t \mid \text{text}) + E_\theta(\tau^t \mid \text{text})\right) + \xi\right), \, \xi \sim \mathcal{N}(0, \sigma_t^2 \mathbf{I}) \tag{8}$$

which corresponds to

$$\tau^{t-1} = \alpha^t \left(\tau^t - \gamma\left(\epsilon_{\text{pretrained}}(\tau^t, t \mid \text{text}) + \epsilon_\theta(\tau^t, t \mid \text{text})\right) + \xi\right), \, \xi \sim \mathcal{N}(0, \sigma_t^2 \mathbf{I}) \tag{9}$$

Thus, to probabilistically adapt a pre-trained denoising diffusion model to a new dataset $D_{\text{Adapt}}$, a diffusion sampling procedure can be used, where the noise prediction is the sum of predictions from both the pre-trained model and the domain-specific model. To control the strength of the pre-trained prior in the generated video, a weighted sum can be used for the noise estimations.

In practice, directly generating videos using a denoising model may generate poor quality videos, as the underlying learned distribution $p_\theta(\tau)$ can exhibit many spurious likelihood modes. To improve video quality, low temperature video samples (i.e., video samples having lower variations) can be generated by utilizing classifier free guidance, which corresponds to sampling from a modified probability distribution:

$$p^{\mathrm{ctg}}(\tau \mid \mathrm{text}) \propto p(\tau)\left(\frac{p(\tau \mid \mathrm{text})}{p(\tau)}\right)^{\alpha} \propto p(\tau)p(\mathrm{text} \mid \tau)^{\alpha}$$

$$(10)$$

where $\alpha$ corresponds to the classifier free guidance score, typically chosen to be significantly larger than 1. By up-weighting the expression $p(\mathrm{text} \mid \tau)$ via the inverse temperature $\alpha$, the modified distribution $p^{cfg}(\tau \mid \mathrm{text})$ generates lower temperature video samples (conditioned on the text embedding.

To effectively leverage a broad probabilistic prior while simultaneously generating low temperature samples, a new text-conditional video distribution $p_{\mathrm{product}}(\tau \mid \mathrm{text}) \propto p_{\mathrm{pretrained}}(\tau \mid \mathrm{text})p_{\theta}(\tau \mid \mathrm{text})$ can be used. The new distribution $p_{\mathrm{product}}(\tau \mid \mathrm{text})$ can be constructed using the unconditional video density $p_{\theta}(\tau)$ learned on $D_{\mathrm{Adapt}}$ By increasing the inverse temperature $\alpha$ on the new distribution, low-temperature and high quality video samples conditioned on a given text can be generated by sampling from the modified distribution

$$\tilde{p}_{\theta}^{*}(\tau \mid \mathrm{text}) = p_{\theta}(\tau)\left(\frac{\tilde{p}_{\theta}(\tau \mid \mathrm{text})}{p_{\theta}(\tau)}\right)^{\alpha}$$

which corresponds to sampling from

$$\tilde{\epsilon}_{\theta}(\tau, t \mid \mathrm{text}) = \epsilon_{\theta}(\tau, t) + \alpha\left(\epsilon_{\theta}(\tau, t \mid \mathrm{text}) + \gamma\epsilon_{\mathrm{pretrained}}(\tau, t \mid \mathrm{text}) - \epsilon_{\theta}(\tau, t)\right)$$
,

which corresponds to Eq. (1). That is, the classifier free guidance can be implemented by further including the unconditioned noise output 147 in the combined noise output 150.

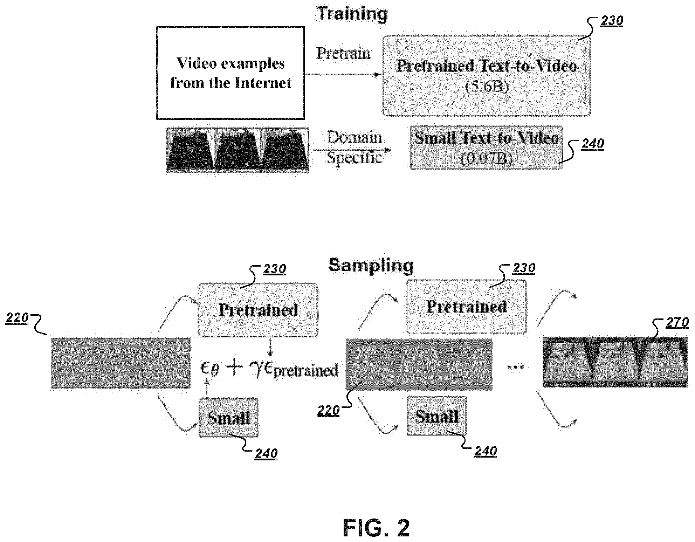

FIG. 2 illustrates a particular example workflow of a video generation system. The pre-trained text-to-video model 230 (corresponding to the first denoising diffusion model 130 with reference to FIG. 1) has been trained using a large number of diverse video samples, e.g., video examples from the internet. The small text-to-video model 240 (corresponding to the second denoising diffusion model 140 with reference to FIG. 1) can be trained using a small dataset of domain-specific videos (i.e., videos that belong to a particular type).

In each of a plurality of iterations, the pre-trained model 230 is configured to process an intermediate representation 220 to generate a first noise output $\varepsilon_{\mathrm{pretrained}}$. The small model 240 is configured to process the intermediate representation 220 to generate a second noise output $\varepsilon_{\theta}$. The system combines the first and second noise outputs to generate a combined noise output $\varepsilon_{\theta} + \gamma\varepsilon_{\mathrm{pretrained}}$. The system uses the combined noise output to update the intermediate representation 220 for the next iteration. After the final iteration, the system outputs the updated intermediate representation as the generated video output 270.

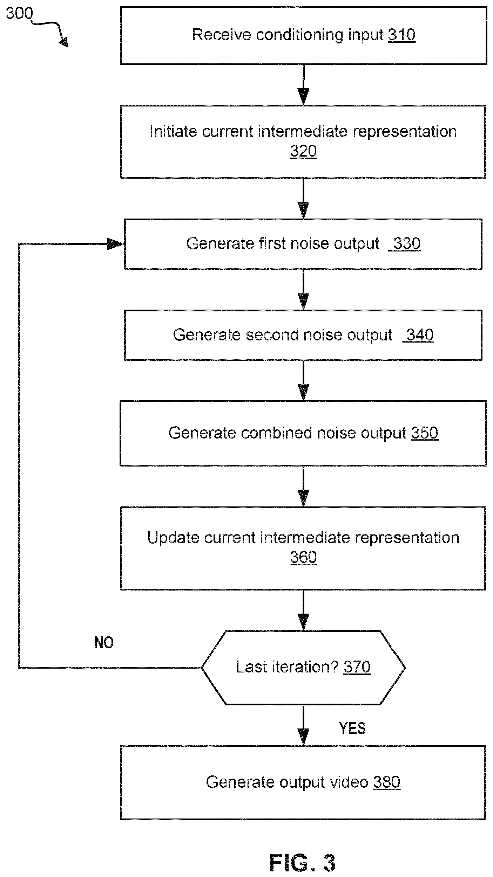

FIG. 3 is a flow diagram of an example process 300 for generating an output video. For convenience, the process 300 will be described as being performed by a system of one or more computers located in one or more locations. For example, a video generation system, e.g., the video generation system 100 of FIG. 1, appropriately programmed in accordance with this specification, can perform the process 300.

At 310, the system receives a conditioning input. As described in more detail with reference to FIG. 1, the conditioning input can take any appropriate form. For example, the conditioning input can include an input text prompt.

At 320, the system initializes a current intermediate representation of the output video. As described in more detail with reference to FIG. 1, the system can initialize the current intermediate representation by sampling a noise distribution, e.g., a Gaussian distribution, for the intensity values of the pixels in the video frames.

Next, the system performs 330-370 for a plurality of iterations to update the current intermediate representation.

At 330, the system generates a first noise output by processing a first input including the current intermediate representation using a first denoising diffusion model conditioned on the conditioning input. The first denoising diffusion model has been trained on first training data comprising a first plurality of training videos.

At 340, the system generates a second noise output conditioned on the conditioning input by processing a second input including the current intermediate representation using a second denoising diffusion model conditioned on the conditioning input. The second denoising diffusion model (i) is different from the first denoising diffusion model and (ii) has been trained on second training data comprising a second plurality of training videos.

As described in more detail with reference to FIG. 1, in some cases, the first denoising diffusion model has a greater number of model parameters than the second denoising diffusion model. In some cases, the first denoising diffusion model has been trained on a greater number of training videos than the second denoising diffusion model. In some cases, the second denoising diffusion model has been trained on training videos belonging to a particular type, and the first denoising diffusion model has been trained on more than one type of training videos.

As described in more detail with reference to FIG. 1, in some cases, each respective iteration corresponds to a respective noise level, and each of the first and the second input further includes data specifying the respective noise level.

At 350, the system generates a combined noise output by combining at least (i) the first noise output and (ii) the second noise output. As described in more detail with reference to FIG. 1, in some cases, the combined noise output is computed as a weighted sum of (i) the first noise output and (ii) the second noise output. In some cases, the system further generates a third noise output by processing a third input comprising the current intermediate representation using the second denoising diffusion model, where the third noise output is not conditioned on the conditioning input, and the combined noise output is generated by combining (i) the first noise output, (ii) the second noise output, and (iii) the third noise output.

At 360, the system updates the current intermediate representation using the combined noise output generated for the iteration. As described in more detail with reference to FIG. 1, for each iteration other than the last iteration, to update the current intermediate representation, the system performs diffusing sampling to an input comprising the current intermediate representation and the combined noise output.

At 370, the system determines whether the current iteration is the final iteration. If the system determines that the current iteration is the final iteration, the system starts the next iteration with the updated intermediate representation. If the system determines that the current iteration is the final iteration, the system generates the output video from the current intermediate representation after the final iteration (at 380).

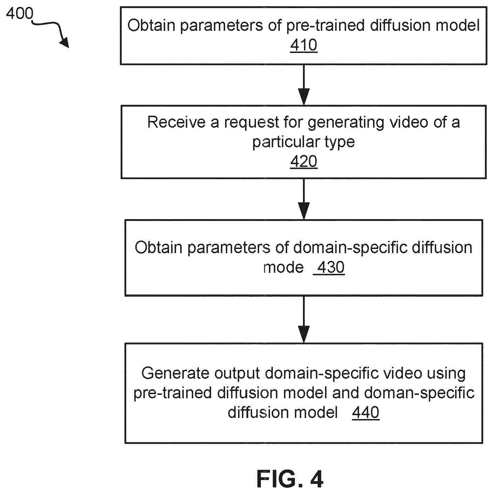

FIG. 4 is a flow diagram of example process 400 for generating a domain-specific video. For convenience, the process 400 will be described as being performed by a system of one or more computers located in one or more locations. For example, a video generation system, e.g., the video generation system 100 of FIG. 1, appropriately programmed in accordance with this specification, can perform the process 400.

At 410, the system obtains model parameter values for a pre-trained denoising diffusion model. The pre-trained denoising diffusion model (i) is configured to process an intermediate input to generate a noise output, and (ii) has been trained on first training data comprising a plurality of training videos.

At 420, the system receives a request for generating a video of a particular type. As described in more detail with reference to FIG. 1, the particular type can refer to a particular style, a particular intended purpose, a particular content format, or a particular subject or field.

At 430, the system obtains model parameter values for a domain-specific denoising diffusion model. The domain-specific denoising diffusion model has been trained on second training data comprising a plurality of domain-specific training videos of the particular type.

In some cases, to obtain the model parameter values for the domain-specific denoising diffusion model, the system obtains the second training data including the plurality of domain-specific training videos of the particular type, and training the domain-specific denoising diffusion model on the second training data.

At 440, the system generates a domain-specific output video using the pre-trained denoising diffusion model and the domain-specific denoising diffusion model. The generating processes are similar to those described with reference to FIG. 3, where the pre-trained denoising diffusion model corresponds to the first denoising diffusion model with reference to FIG. 3, and the domain-specific denoising diffusion model corresponds to the second denoising diffusion model with reference to FIG. 3.

In some cases, the system can generate domain-specific output videos of different types. For example, the system can receive a request for generating a video of a second particular type (that is different from the first particular type). The system obtains model parameter values for a second domain-specific denoising diffusion model, where the domain-specific denoising diffusion model has been trained on third training data comprising a plurality of domain-specific training videos of the second particular type. The system then generates a domain-specific output video having the second type using the pre-trained denoising diffusion model and the second domain-specific denoising diffusion model.

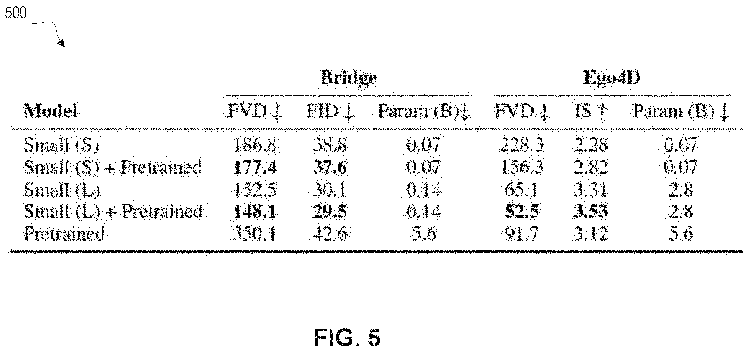

FIG. 5 illustrates a performance comparison of video generation techniques. Two domain-specific datasets are used to evaluate the performance of different video generation techniques. The "Bridge" dataset includes task-specific videos of a robot that is out of the distribution of the pretraining data. The "Ego4D" data includes mostly egocentric videos that are not commonly found on the internet. For the pre-trained model, a base model with 5.6B parameters is pre-trained on generic videos from the internet. For the domain-specific models, the diffusion models are downscaled from the pre-trained model by a factor of 80 or 40. For each technique, video quality metrics including the FVD and FD are computed for the generated output videos.

As shown in FIG. 5, the Bridge dataset, training a small model with parameters equivalent to 1.25% of the pre-trained model (first row) already achieves better metrics than the pre-trained model. However, incorporating the pre-trained model as a probabilistic prior further improves the metrics of the small model (second row). On Ego4D, due to the complexity of the egocentric videos, the smallest model with 1.25% of the pre-trained video model can no longer achieve performance better than the pre-trained model (first row), but incorporating the pre-trained model during sampling still improves performance (second row). The comparison shown in FIG. 5 demonstrates the video quality improvement provided by the described techniques.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, subprograms, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a Jax framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what can be claimed, but rather as descriptions of features that can be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features can be described above as acting in certain combinations and even initially be claimed as such, one or more features from a claimed combination can in some cases be excised from the combination, and the claimed combination can be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system modules and components in the embodiments described above should not be understood as requiring such separation in all embodiments, and it should be understood that the described program components and systems can generally be integrated together in a single software product or packaged into multiple software products.

**Claims**

1. A computer-implemented method for generating an output video conditioned on an input, the method comprising:

   receiving a conditioning input;
   initializing a current intermediate representation of the output video; and
   at each of a plurality of iterations, updating the current intermediate representation, the updating comprising:

   generating a first noise output by processing a first input comprising the current intermediate representation using a first denoising diffusion model conditioned on the conditioning input, wherein the first denoising diffusion model has been trained on first training data comprising a first plurality of training videos;
   generating a second noise output conditioned on the conditioning input by processing a second input comprising the current intermediate representation using a second denoising diffusion model conditioned on the conditioning input, wherein the second denoising diffusion model (i) is different from the first denoising diffusion model and (ii) has been trained on second training data comprising a second plurality of training videos;

generating a combined noise output by combining at least (i) the first noise output and (ii) the second noise output; and

updating the current intermediate representation using the combined noise output generated for the iteration; and

generating the output video from the current intermediate representation after the final iteration.

2. The method of claim 1, wherein:

the first denoising diffusion model has a greater number of model parameters than the second denoising diffusion model, and/or

wherein the first denoising diffusion model has been trained on a greater number of training videos than the second denoising diffusion model, and/or

wherein the second denoising diffusion model has been trained on training videos belonging to a particular type, and the first denoising diffusion model has been trained on more than one type of training videos.

3. The method of any of the preceding claims, wherein updating the current intermediate representation for the respective iteration further comprises:

generating a third noise output by processing a third input comprising the current intermediate representation using the second denoising diffusion model, wherein the third noise output is not conditioned on the conditioning input; and wherein

generating the combined noise output comprises: combining (i) the first noise output, (ii) the second noise output, and (iii) the third noise output.

4. The method of any of the preceding claims, wherein for each iteration other than the last iteration, updating the current intermediate representation comprises:

performing diffusion sampling to an input comprising the current intermediate representation and the combined noise output.

5. The method of any of the preceding claims, wherein each respective iteration corresponds to a respective noise level, and wherein each of the first and the second input further comprises data specifying the respective noise level.

6. The method of any of the preceding claims, wherein combining at least (i) the first noise output and (ii) the second noise output comprises:

computing a weighted sum of (i) the first noise output and (ii) the second noise output.

7. The method of any one of the preceding claims, wherein the conditioning input is an input text prompt.

8. A system comprising:

one or more computers; and

one or more storage devices storing instructions that when executed by the one or more computers, cause the one or more computers to perform the operations of the respective method of any one of claims 1-7.

9. One or more computer-readable storage media storing instructions that, when executed by one or more computers, cause the one or more computers to perform the operations of the respective method of any one of claims 1-7.

**Patentansprüche**

1. Computerimplementiertes Verfahren zum Generieren eines Ausgabevideos, das auf einer Eingabe konditioniert ist, wobei das Verfahren umfasst:

Empfangen einer Konditionierungseingabe;

Initialisieren einer aktuellen Zwischendarstellung des Ausgabevideos; und

bei jeder einer Mehrzahl von Iterationen, Aktualisieren der aktuellen Zwischendarstellung, wobei das Aktualisieren umfasst:

Generieren einer ersten Rauschausgabe durch Verarbeiten einer ersten Eingabe, die die aktuelle Zwischendarstellung umfasst, unter Verwendung eines ersten Rauschunterdrückungs-Diffusionsmodells, das auf der Konditionierungeingabe konditioniert ist, wobei das erste Rauschunterdrückungs-Diffusionsmodell an ersten Trainingsdaten trainiert worden ist, die eine erste Mehrzahl von Trainingsvideos umfassen;
Generieren einer zweiten Rauschausgabe, die auf der Konditionierungeingabe konditioniert ist, durch Verarbeiten einer zweiten Eingabe, die die aktuelle Zwischendarstellung umfasst, unter Verwendung eines zweiten Rauschunterdrückungs-Diffusionsmodells, das auf der Konditionierungeingabe konditioniert ist, wobei das zweite Rauschunterdrückungs-Diffusionsmodell (i) von dem ersten Rauschunterdrückungs-Diffusionsmodell verschieden ist und (ii) an zweiten Trainingsdaten trainiert worden ist, die eine zweite Mehrzahl von Trainingsvideos umfassen;
Generieren einer kombinierten Rauschausgabe durch Kombinieren von mindestens (i) der ersten Rauschausgabe und (ii) der zweiten Rauschausgabe; und
Aktualisieren der aktuellen Zwischendarstellung unter Verwendung der für die Iteration generierten kombinierten Rauschausgabe; und
Generieren des Ausgabevideos aus der aktuellen Zwischendarstellung nach der finalen Iteration.

2. Verfahren nach Anspruch 1, wobei:

das erste Rauschunterdrückungs-Diffusionsmodell eine größere Anzahl von Modellparametern als das zweite Rauschunterdrückungs-Diffusionsmodell aufweist, und/oder
wobei das erste Rauschunterdrückungs-Diffusionsmodell an einer größeren Anzahl von Trainingsvideos als das zweite Rauschunterdrückungs-Diffusionsmodell trainiert worden ist, und/oder
wobei das zweite Rauschunterdrückungs-Diffusionsmodell an Trainingsvideos trainiert worden ist, die zu einem bestimmten Typ gehören, und das erste Rauschunterdrückungs-Diffusionsmodell an mehr als einem Typ von Trainingsvideos trainiert worden ist.

3. Verfahren nach einem der vorhergehenden Ansprüche, wobei das Aktualisieren der aktuellen Zwischendarstellung für die jeweilige Iteration ferner umfasst:

Generieren einer dritten Rauschausgabe durch Verarbeiten einer dritten Eingabe, die die aktuelle Zwischendarstellung umfasst, unter Verwendung des zweiten Rauschunterdrückungs-Diffusionsmodells, wobei die dritte Rauschausgabe nicht auf der Konditionierungeingabe konditioniert ist; und wobei
das Generieren der kombinierten Rauschausgabe umfasst: Kombinieren von (i) der ersten Rauschausgabe, (ii) der zweiten Rauschausgabe und (iii) der dritten Rauschausgabe.

4. Verfahren nach einem der vorhergehenden Ansprüche, wobei für jede andere Iteration als die letzte Iteration das Aktualisieren der aktuellen Zwischendarstellung umfasst:
Durchführen eines Diffusions-Samplings an einer Eingabe, die die aktuelle Zwischendarstellung und die kombinierte Rauschausgabe umfasst.

5. Verfahren nach einem der vorhergehenden Ansprüche, wobei jede jeweilige Iteration einem jeweiligen Rauschpegel entspricht, und wobei jede der ersten und der zweiten Eingabe ferner Daten umfasst, die den jeweiligen Rauschpegel spezifizieren.

6. Verfahren nach einem der vorhergehenden Ansprüche, wobei das Kombinieren von mindestens (i) der ersten Rauschausgabe und (ii) der zweiten Rauschausgabe umfasst:
Berechnen einer gewichteten Summe von (i) der ersten Rauschausgabe und (ii) der zweiten Rauschausgabe.

7. Verfahren nach einem der vorhergehenden Ansprüche, wobei die Konditionierungeingabe ein Eingabetext-Prompt ist.

8. System, umfassend:

einen oder mehrere Computer; und
eine oder mehrere Speichervorrichtungen, die Anweisungen speichern, die bei Ausführung durch den einen oder die mehreren Computer den einen oder die mehreren Computer veranlassen, die Operationen des jeweiligen Verfahrens nach einem der Ansprüche 1-7 durchzuführen.

9.  Ein oder mehrere computerlesbare Speichermedien, die Anweisungen speichern, die bei Ausführung durch einen oder mehrere Computer den einen oder die mehreren Computer veranlassen, die Operationen des jeweiligen Verfahrens nach einem der Ansprüche 1-7 durchzuführen.

**Revendications**

1.  Procédé mis en œuvre par ordinateur pour la génération d'une vidéo de sortie conditionnée par une entrée, le procédé comprenant :

    la réception d'une entrée de conditionnement ;
    l'initialisation d'une représentation intermédiaire actuelle de la vidéo de sortie ; et
    à chacune d'une pluralité d'itérations, la mise à jour de la représentation intermédiaire actuelle, la mise à jour comprenant :

    la génération d'une première sortie de bruit en traitant une première entrée comprenant la représentation intermédiaire actuelle à l'aide d'un premier modèle de diffusion de débruitage conditionné par l'entrée de conditionnement, dans lequel le premier modèle de diffusion de débruitage a été entraîné sur de premières données d'entraînement comprenant une première pluralité de vidéos d'entraînement ;
    la génération d'une deuxième sortie de bruit conditionnée par l'entrée de conditionnement en traitant une deuxième entrée comprenant la représentation intermédiaire actuelle à l'aide d'un second modèle de diffusion de débruitage conditionné par l'entrée de conditionnement, dans lequel le second modèle de diffusion de débruitage (i) est différent du premier modèle de diffusion de débruitage et (ii) a été entraîné sur des secondes données d'entraînement comprenant une seconde pluralité de vidéos d'entraînement ;
    la génération d'une sortie de bruit combinée en combinant au moins (i) la première sortie de bruit et (ii) la deuxième sortie de bruit ; et
    la mise à jour de la représentation intermédiaire actuelle à l'aide de la sortie de bruit combinée générée pour l'itération ; et
    la génération de la vidéo de sortie à partir de la représentation intermédiaire actuelle après la dernière itération.

2.  Procédé selon la revendication 1, dans lequel :

    le premier modèle de diffusion de débruitage possède un plus grand nombre de paramètres de modèle que le second modèle de diffusion de débruitage, et/ou
    dans lequel le premier modèle de diffusion de débruitage a été entraîné sur un plus grand nombre de vidéos d'entraînement que le second modèle de diffusion de débruitage, et/ou
    dans lequel le second modèle de diffusion de débruitage a été entraîné sur des vidéos d'entraînement appartenant à un type particulier, et le premier modèle de diffusion de débruitage a été entraîné sur plusieurs types de vidéos d'entraînement.

3.  Procédé selon l'une quelconque des revendications précédentes, dans lequel la mise à jour de la représentation intermédiaire actuelle pour l'itération respective comprend en outre :

    la génération d'une troisième sortie de bruit en traitant une troisième entrée comprenant la représentation intermédiaire actuelle à l'aide du second modèle de diffusion de débruitage, dans lequel la troisième sortie de bruit n'est pas conditionnée par l'entrée de conditionnement ; et dans lequel
    la génération de la sortie de bruit combinée comprend : la combinaison (i) de la première sortie de bruit, (ii) de la deuxième sortie de bruit et (iii) de la troisième sortie de bruit.

4.  Procédé selon l'une quelconque des revendications précédentes, dans lequel, pour chaque itération autre que la dernière itération, la mise à jour de la représentation intermédiaire actuelle comprend :
    la réalisation d'un échantillonnage par diffusion sur une entrée comprenant la représentation intermédiaire actuelle et la sortie de bruit combinée.

5.  Procédé selon l'une quelconque des revendications précédentes, dans lequel chaque itération respective correspond à un niveau de bruit respectif, et dans lequel chacune des première et deuxième entrées comprend en outre des données spécifiant le niveau de bruit respectif.

6. Procédé selon l'une quelconque des revendications précédentes, dans lequel la combinaison d'au moins (i) la première sortie de bruit et (ii) de la deuxième sortie de bruit comprend :
le calcul d'une somme pondérée de (i) la première sortie de bruit et (ii) de la deuxième sortie de bruit.

7. Procédé selon l'une quelconque des revendications précédentes, dans lequel l'entrée de conditionnement est une invite de texte d'entrée.

8. Système comprenant :

un ou plusieurs ordinateurs ; et
un ou plusieurs dispositifs de stockage stockant des instructions qui, lorsqu'elles sont exécutées par les un ou plusieurs ordinateurs, amènent les un ou plusieurs ordinateurs à réaliser les opérations du procédé respectif selon l'une quelconque des revendications 1 à 7.

9. Un ou plusieurs supports de stockage lisible par ordinateur stockant des instructions qui, lorsqu'elles sont exécutées par un ou plusieurs ordinateurs, amènent les un ou plusieurs ordinateurs à réaliser les opérations du procédé respectif selon l'une quelconque des revendications 1 à 7.

FIG. 1

**FIG. 2**

300

Receive conditioning input 310

Initiate current intermediate representation 320

Generate first noise output 330

Generate second noise output 340

Generate combined noise output 350

Update current intermediate representation 360

NO

Last iteration? 370

YES

Generate output video 380

FIG. 3

400

Obtain parameters of pre-trained diffusion model
410

Receive a request for generating video of a
particular type
420

Obtain parameters of domain-specific diffusion
mode  430

Generate output domain-specific video using
pre-trained diffusion model and doman-specific
diffusion model  440

FIG. 4

500

| Model | Bridge | | | Ego4D | | |
|---|---|---|---|---|---|---|
| | FVD ↓ | FID ↓ | Param (B)↓ | FVD ↓ | IS ↑ | Param (B) ↓ |
| Small (S) | 186.8 | 38.8 | 0.07 | 228.3 | 2.28 | 0.07 |
| Small (S) + Pretrained | **177.4** | **37.6** | 0.07 | 156.3 | 2.82 | 0.07 |
| Small (L) | 152.5 | 30.1 | 0.14 | 65.1 | 3.31 | 2.8 |
| Small (L) + Pretrained | **148.1** | **29.5** | 0.14 | **52.5** | **3.53** | 2.8 |
| Pretrained | 350.1 | 42.6 | 5.6 | 91.7 | 3.12 | 5.6 |

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHAO, YUYANG et al.** Make-a-protagonist: Generic video editing with an ensemble of experts.. *arXiv:2305.08850*, 2023

- **HO et al.** Imagen video: High 274 definition video generation with diffusion models. *arXiv:2210.02303*, 2022
- **HO et al.** Diffusion probabilistic modeling for video generation. *arXiv:2203.09481*, 2022